(19) Europäisches Patentamt
European Patent Office
Office européen des brevets

(11) Veröffentlichungsnummer: **0 372 380 A2**

(12) **EUROPÄISCHE PATENTANMELDUNG**

(21) Anmeldenummer: **89122057.6**

(51) Int. Cl.5: **C07F 7/10, C08G 77/62**

(22) Anmeldetag: **29.11.89**

(30) Priorität: **03.12.88 DE 3840778**

(43) Veröffentlichungstag der Anmeldung: **13.06.90 Patentblatt 90/24**

(84) Benannte Vertragsstaaten: **CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Vaahs, Tilo, Dr.**
**Am Flachsland 54**
**D-6233 Kelkheim(Taunus)(DE)**

(54) **Polysubstituierte Oligosilazane und Verfahren zu ihrer Herstellung.**

(57) Die Erfindung betrifft neue polysubstituierte Oligosilazane und ein Verfahren zu ihrer Herstellung. Das Verfahren besteht darin daß man überschüssigen Ammoniak mit einem Ausgangsmaterial, das mindestens eine der beiden Komponenten (I) $R^1R^2SiCl_2$ und (II) $Cl_2R^3Si\text{-}CH_2CH_2\text{-}SiR^3Cl_2$ sowie mindestens eine der beiden Komponenten (III) $R^4SiCl_3$ und (IV) $Cl_3Si\text{-}CH_2CH_2\text{-}SiR^5Cl_2$ enthält, bei -70 bis +100 °C umsetzt, wobei unabhängig voneinander

$R^1,R^2,R^4$ = H, $C_1$-$C_6$-Alkyl oder $C_2$-$C_6$-Alkenyl und

$R^3,R^5$ = $C_1$-$C_6$-Alkyl oder $C_2$-$C_6$-Alkenyl ist

und der molare prozentuale Anteil an (I) oder (II) oder deren Gemisch im Ausgangsmaterial 30 bis 99 % beträgt, wobei die Umsetzung eines nur (I) und (III) enthaltenden Gemisches mit Ammoniak ausgeschlossen sein soll.

Die erfindungsgemäßen Oligosilazane können durch eine weitere Umsetzung mit Chlorsilanen in polymere Chlorsilazane umgewandelt werden, die ihrerseits zunächst in Polysilazane und dann in Siliciumnitrid enthaltende keramische Materialien überführt werden können.

EP 0 372 380 A2

**Polysubstituierte Oligosilazane und Verfahren zu ihrer Herstellung**

Die Erfindung betrifft neue polysubstituierte Oligosilazane sowie ein Verfahren zu ihrer Herstellung. Die erfindungsgemäßen Oligosilazane können durch eine weitere Umsetzung mit Chlorsilanen in polymere Chlorsilazane umgewandelt werden, die ihrerseits zunächst in Polysilazane und dann in Siliciumnitrid enthaltende keramische Materialien überführt werden können.

Die Herstellung von Polysilazanen aus anderen Oligomeren wurde bereits beschrieben (US-PS 4 482 669, US-PS 4 720 532, PCT-WO 88/01260), ebenfalls die Pyrolyse von Polysilazanen zu Siliciumnitrid enthaltenden keramischen Materialien (R.R. Wills et al. Ceramic Bulletin, Vol. 62 (1983) 904-915).

Zur Herstellung von oligomeren oder niedermolekularen Silazanen als Zwischenprodukte für Polymere wurden bisher im allgemeinen Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828).

Die vorliegende Erfindung stellt nun neue Ausgangsmaterialien für Polysilazane zur Verfügung, nämlich oligomere Silazane.

Ein Gegenstand der vorliegenden Erfindung ist ein Verfahren zur Herstellung von oligomeren Silazanen, dadurch gekennzeichnet, daß man überschüssigen Ammoniak mit einem Ausgangsmaterial, das mindestens eine der beiden Komponenten (I) $R^1R^2SiCl_2$ und (II) $Cl_2R^3Si\text{-}CH_2\text{-}CH_2\text{-}SiR^3Cl_2$ sowie mindestens eine der beiden Komponenten (III) $R^4SiCl_3$ und (IV) $Cl_3Si\text{-}CH_2\text{-}CH_2\text{-}SiR^5Cl_2$ enthält, bei -70° C bis -100° C umsetzt, wobei unabhängig voneinander

$R^1,R^2,R^4$ = H, $C_1$-$C_6$-Alkyl oder $C_2$-$C_6$-Alkenyl und

$R^3,R^5$ = $C_1$-$C_6$-Alkyl oder $C_2$-$C_6$-Alkenyl ist

und der molare prozentuale Anteil an (I) oder (II) oder deren Gemisch im Ausgangsmaterial 30 bis 99 % beträgt, wobei die Umsetzung eines nur (I) und (II) enthaltenden Gemisches mit Ammoniak ausgeschlossen sein soll. Vorzugsweise ist unabhängig voneinander $R^1,R^2,R^4$ = H, $C_1$-$C_3$-Alkyl oder $C_2$-$C_3$-Alkenyl und $R^3,R^5$ = $C_1$-$C_3$-Alkyl oder $C_2$-$C_3$-Alkenyl. Besonders bevorzugt ist $R^1$ = H, $R^2 = R^3 = R^5 = CH_3$ und $R^4$ = $CH_3$ oder Vinyl.

Die als Ausgangsmaterialien eingesetzten Chlorsilane (I) $R^1R^2SiCl_2$ und (III) $R^4SiCl_3$ sind im Handel erhältlich, die ethylenverbrückten Spezies (II) und (IV) sind durch Hydrosilylierung von $R_3HSiCl_2$ und Ethin zugänglich, oder durch Hydrosilylierung von Vinyltrichlorsilan und $R^5HSiCl_2$ (siehe Versuchsbericht).

Zur Umsetzung mit Amoniak werden vorzugsweise die Chlorsilane in einem Lösungsmittel vorgelegt, welches sich inert gegenüber den Reaktanten verhält, und mit Ammoniak bis zur Sättigung vermischt, was dann eintritt, wenn sämtliche SiCl-Funktionen durch NH-Gruppen substituiert sind. Für die Reaktion geeignete Lösungsmittel sind z.B. gesättigte aliphatische oder aromatische Kohlenwasserstoffe wie n-Pentan, Cyclohexan, Toluol, chlorierte Kohlenwasserstoffe wie Chloroform oder Chlorbenzol, oder Ether wie Diethylether oder THF.

Gegebenenfalls kann das Verfahren auch unter vermindertem Druck durchgeführt werden. Auch bei Drücken von 1 bis 100 bar kann gearbeitet werden. Ammoniak kann als Gas oder Flüssigkeit zudosiert werden. Das Verfahren kann auch kontinuierlich gestaltet werden.

Die hergestellten neuen oligomeren Silazane haben eine molekulare Struktur, die durch die Formel (V)

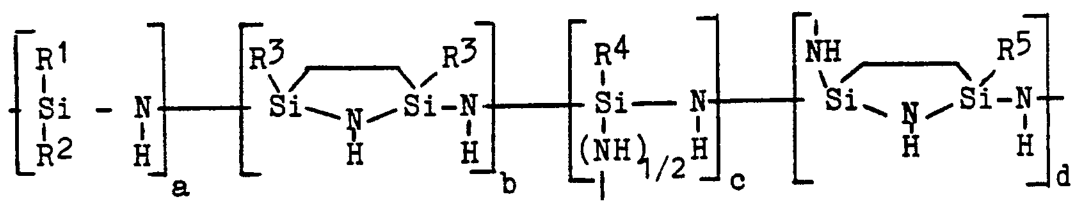

wiedergegeben werden kann.

Ein weiterer Gegenstand der Erfindung sind demgemäß oligomere Silazane der Formel (V)

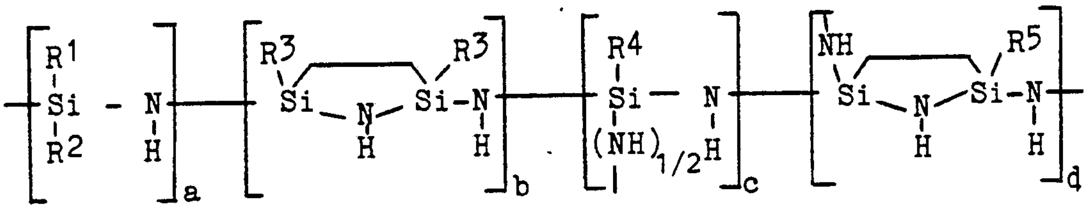

wobei unabhängig voneinander
$R^1,R^2,R^4$ = H, $C_1$-$C_6$-Alkyl oder $C_2$-$C_6$-Alkenyl und
$R^3,R^5$ = $C_1$-$C_6$-Alkyl oder $C_2$-$C_6$-Alkenyl ist
und der Fall, daß gleichzeitig a>0,b>0,c= 0 und d= 0 ist, ausgeschlossen sein soll. a,b,c,d sind die Molfraktionen der jeweiligen Struktureinheiten

Die Summe aus a+b+c+d ergibt stets den Wert 1.

Vorzugsweise ist $R^1,R^2,R^4$ = H, $C_1$-$C_3$-Alkyl oder $C_2$-$C_3$-Alkenyl und $R^3,R^5$ = $C_1$-$C_3$-Alkyl oder $C_2$-$C_3$-Alkenyl. Besonders bevorzugt ist $R^1$ = H, $R^2 = R^3 = R^5$ = $CH_3$ und $R^4$ = $CH_3$ oder Vinyl.

Die erfindungsgemäßen Oligosilazane der Formel (V) können wie folgt in Siliciumnitrid enthaltendes keramisches Material umgewandelt werden: Zunächst setzt man die Oligosilazane mit mindestens einem der Chlorsilane $Cl_2R^6Si$-$CH_2CH_2$-$SiR^6Cl_2$, $Cl_3Si$-$CH_2CH_2$-$SiR^7Cl_2$, $R^8SiCl_3$ oder $R^9SiHCl_2$ bei 30°C bis 300°C um, wobei unabhängig voneinander $R^6,R^7,R^8,R^9$ = $C_1$-$C_6$- Alkyl oder $C_2$-$C_6$-Alkenyl ist, vorzugsweise $C_1$-$C_3$-Alkyl oder $C_2$-$C_3$-Alkenyl Besonders bevorzugt ist $R^6 = R^7 = R^9$ = $CH_3$ und $R^8$ = $CH_3$ oder Vinyl. Bei dieser Umsetzung entstehen polysubstituierte chlorhaltige Silazanpolymere, im folgenden auch als polymere Chlorsilazane bezeichnet.

Vorzugsweise beträgt bei der Umsetzung zum polymeren Chlorsilazan das molare Verhältnis der Reaktanten Chlorsilan:Monomereinheiten des Oligosilazans (n= 1) etwa 0,1:1 bis etwa 1,5:1, insbesondere etwa 0,1:1 bis etwa 0,7:1.

Zur Umsetzung der Reaktanten miteinander werden vorzugsweise die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50°C gehalten. Anschließend erhitzt man auf Temperaturen von 100 bis 300°C, vorzugsweise auf 120 bis 250°C.

Das als Nebenprodukt gebildete $NH_3$ entweicht während der Reaktion teilweise. Nach beendeter Umsetzung wird der Rest an leichter flüchtigen Verbindungen im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen organischen Lösungsmittel, wie n-Hexan, Toluol, Ether von dem hergestellten polymeren Chlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die polymeren Chlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Die polymeren Chlorsilazane können durch Umsetzung mit Ammoniak ("Ammonolyse") in Polysilazane überführt werden, die wiederum durch Pyrolyse in Siliziumnitrid enthaltendes keramisches Material umgewandelt werden können.

Die Ammonolyse kann in flüssigem $NH_3$ erfolgen. Es ist jedoch vorteilhaft, sie in einem organischen Lösungsmittel durchzuführen. Geeignet sind alle Lösungsmittel, die sich inert gegenüber den polymeren Chlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymere Chlorsilazan in Lösung vorzulegen und gasförmigen Ammoniak einzuleiten oder flüssigen

Ammoniak hinzuzufügen. Wurden die polymeren Chlorsilazane in einem geeigneten organischen Lösungsmittel hergestellt, so kann die Ammonolyse ohne vorherige Abtrennung des $NH_4Cl$ in diesem Lösungsmittel durchgeführt werden. Die Ammonolyse wird vorzugsweise mit einem Überschuß $NH_3$ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100° C gearbeitet, vorzugsweise bei -20 bis +30° C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33° C bei der Verwendung von flüssigem $NH_3$ zu arbeiten.

Nach beendeter Ammonolyse wird ggf. das überschüssige $NH_3$ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polysilazane unmittelbar als weiße Pulver erhalten. Die Polysilazane sind in den obigen organischen Lösungsmitteln löslich, so daß diese sowohl für das Beschichten von Oberflächen als auch für die Herstellung von Fasern verwendet werden können.

Die Polysilazane können durch Pyrolyse in inerter Stickstoff-oder Argonatmosphäre bei Temperaturen von 800 bis 1200° C zu amorphen, dichten Materialien pyrolysiert werden, die im wesentlichen aus Si, N und C bestehen und in Spuren auch H und O enthalten können. Bei Pyrolysetemperaturen oberhalb 1200° C, etwa im Bereich von 1200° C bis 1400° C, entstehen teilamorphe, mikrokristalline keramische Werkstoffe, die als kristalline Phase a-$Si_3N_4$ enthalten.

Ein besonderer Vorteil ist, daß sich die Polysilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polysilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polysilazane ist die Herstellung dichter, gut haftender, amorpher oder mikrokristalliner keramischer Beschichtungen auf Metallen, insbesondere Stählen. Die Beschichtung erfolgt mit Hilfe einer Lösung des Polysilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200° C bzw. 1200 bis 1400° C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polysilazane mit gleichhoher keramischer Ausbeute von 70 bis 90 % statt in Inertgas auch in $NH_3$-Atmosphäre pyrolysieren. Dabei resultiert ein praktisch kohlenstofffreier, glasklarer, farbloser Werkstoff. Bei der Pyrolyse in $NH_3$ bei 1000° C oder höher liegt der C-Gehalt unterhalb 0,5 Gew.-% Das Pyrolyseprodukt besteht je nach Pyrolysetemperatur aus praktisch reinem amorphem Siliziumnitrid (Pyrolyse unterhalb 1200° C) oder kristallinem $Si_3N_4$ (Pyrolyse oberhalb 1200° C, insbesondere oberhalb 1300° C). Die Pyrolyse in $NH_3$ läßt sich auf alle nach den oben beschriebenen Formgebungsverfahren hergestellten Formkörper, also aus Pulvern geformte Körper, Fasern, Beschichtungen anwenden.

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

**Versuchsbericht**

**1.** Herstellung des 1,2-Bis(methyldichlorsilyl)ethans der Formel

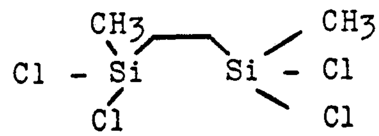

.

Mit Hilfe einer Hydrosilylierung wurden zwei Moleküle Methyldichlorsilan $(CH_3)HSiCl_2$ an ein Molekül Ethin HCCH addiert. Dazu leitete man gasförmiges Ethin in vorgelegtes Toluol als Lösungsmittel ein. Zu dieser Lösung gab man 0.5 ml einer 0.05 molaren Lösung von Hexachlorplatinsäure in Chloroform. Man erhitzte auf 100°C und tropfte langsam Methyldichlorsilan zu (Sdp. 45°C). Dabei wurde ständig Ethin eingeleitet. Der Verlauf der Reaktion wurde über die Temperatur des Reaktionsgemisches verfolgt. Sank sie unter 80°C, so lag zuviel nicht reagiertes Methyldichlorsilan vor, welches man dann vor weiterem Zutropfen zuerst abreagieren ließ. Die Ausbeute an 1,2-Bis(methyldichlorsilyl)ethan war nahezu 100 %, und die Lösung konnte ohne Aufarbeitung für die Herstellung des Oligosilazanes verwendet werden. Der Gehalt an Chlorsilan ließ sich leicht mit Hilfe des $^1$H-NMR-Spektrums feststellen. Bevorzugt sind möglichst geringe Anteile an Lösungsmittel. Völlig lösungsmittelfrei ließ sich die Verbindung herstellen, wenn von vornherein 1,2-Bis(methyldichlorsilyl)ethan vorgelegt wurde, um die notwendige Reaktionstemperatur zu erreichen.

**2.** Herstellung des 1-Methyldichlorsilyl-2-trichlorsilyl-ethans der Formel

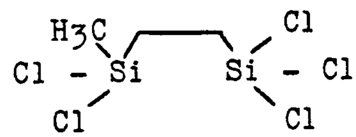

.

300 ml (381 g; 2,36 mol) Vinyltrichlorsilan wurden vorgelegt und mit 0.5 ml einer 0.05 molaren $H_2PtCl_6$-Lösung in $CHCl_3$ versetzt. Dazu wurden bei 90°C 242 ml (271.5 g, 2,36 mol) Methyldichlorsilan langsam zugetropft. Dabei stieg die Temperatur innerhalb des Reaktionsgefäßes auf 120°C an, ohne daß die Ölbadtemperatur erhöht worden war.
Ausbeute: 650 g (99 %) ohne Aufarbeitung, da Produkt in reiner Form vorlag

## Beispiele

### Beispiel 1

Herstellung des oligomeren Silazans der Formel (V) mit $R^1 = H$, $R^2 = R^3 = R^4 = CH_3$ und $a = 0.42$, $b = 0.38$, $c = 0.20$, $d = 0$.

In einem 2-l-Vierhalskolben mit Rührer, Kühlvorrichtung und Einleitungsrohr wurden in 1.5 l absolutem THF 50 ml (55.7 g, 0.48 mol) $CH_3SiHCl_2$, 50 ml (60 g, 0.23 mol) $Cl_2CH_3Si\text{-}CH_2CH_2\text{-}SiCH_3Cl_2$ und 50 ml (63.6 g, 0.43 mol) $CH_3SiCl_3$ gelöst und vermischt. Anschließend leitete man bei Temperaturen zwischen 0°C und 10°C Ammoniak bis zur Sättigung ein. Nach beendeter Reaktion ließ man auftauen und trennte das gebildete Ammoniumchlorid über eine Fritte ab, welches noch 2 mal mit je 200 ml THF gewaschen wurde. Das Filtrat wurde durch Destillation bei Unterdruck und 40°C vom THF und weiteren flüchtigen Bestandteilen befreit. Dabei blieb das lösungsmittelfreie Oligomere zurück.
Ausbeute: 74.5 g (83.2 %)
$^1$H-NMR-Daten:
$SiCH_3$ $\delta = 0.0\text{-}0.5$ ppm(br), Intensität 11.0
$NH + SiCH_2CH_2Si$ $\delta = 0.5\text{-}1.1$ ppm(br), Intensität 6.3
$SiH$ $\delta = 4.5\text{-}5.0$ ppm(br), Intensität 1.1

### Beispiel 2

Herstellung des oligomeren Silazans der Formel (V) mit $R^1 = R^2 = R^3 = R^4 = CH_3$ und a = b = c = d = 0.25.

Es wurde analog zu Beispiel 1 gearbeitet, jedoch mit folgenden Chlorsilanen:
33.9 g (31.9 ml, 0.26 mol) $(CH_3)_2SiCl_2$
67.4 g (56.2 ml, 0.26 mol) $Cl_2CH_3Si\text{-}CH_2\text{-}CH_2\text{-}SiCH_3Cl_2$
39.3 g (30.9 ml, 0.26 mol) $CH_3SiCl_3$
72.8 g (60.6 ml, 0.26 mol) $Cl_3Si\text{-}CH_2CH_2\text{-}SiCH_3Cl_2$
Ausbeute: 85 g (78 %)
$^1$H-NMR-Daten:
$SiCH_3$ $\delta$ = 0.0-0.5 ppm(br) Intensität 14.1
NH + $Si\text{-}CH_2CH_2\text{-}Si$ $\delta$ 0.5-1.3 ppm(br) Intensität 10.4

**Beispiel 3**

Herstellung des oligomeren Silazans der Formel (V) mit $R^1$ = H, $R^2 = R^3 = CH_3$, $R^4$ = Vinyl und a = 0.64, b = 0.16, c = 0.2, d = 0.

Es wurde analog zu Beispiel 1 gearbeitet jedoch mit folgenden Chlorsilanen:
100.3 g (90 ml, 0.78 mol) $CH_3SiHCl_2$
48.0 g (40 ml, 0.19 mol) $Cl_2CH_3Si\text{-}CH_2CH_2\text{-}SiCH_3Cl_2$
38.1 g (30 ml, 0.24 mol) $VinylSiCl_3$
Ausbeute: 92 g (81 %)
$^1$H-NMR-Daten:
$SiCH_3$ $\delta$ = 0.0-0.5 ppm(br), Intensität 11.8
NH + $SiCH_2CH_2Si$ $\delta$ = 0.5-1.2 ppm(br), Intensität 7.1
SiVinyl $\delta$ = 5.5-6.5 ppm(br), Intensität 2.4
SiH $\delta$ = 4.5-5.0 ppm(br), Intensität 2.2

**Ansprüche**

1. Verfahren zur Herstellung von Oligosilazanen, dadurch gekennzeichnet, daß man überschüssigen Ammoniak mit einem Ausgangsmaterial, das mindestens eine der beiden Komponenten (I) $R^1R^2SiCl_2$ und (II) $Cl_2R^3Si\text{-}CH_2CH_2\text{-}SiR^3Cl_2$ sowie mindestens eine der beiden Komponenten (III) $R^4SiCl_3$ und (IV) $Cl_3Si\text{-}CH_2CH_2\text{-}SiR^5Cl_2$ enthält, bei -70 bis +100 °C umsetzt, wobei unabhängig voneinander
$R^1,R^2,R^4$ = H, $C_1$-$C_6$-Alkyl oder $C_2$-$C_6$-Alkenyl und
$R^3,R^5$ = $C_1$-$C_6$-Alkyl oder $C_2$-$C_6$-Alkenyl ist
und der molare prozentuale Anteil an (I) oder (II) oder deren Gemisch im Ausgangsmaterial 30 bis 99 % beträgt, wobei die Umsetzung eines nur (I) und (III) enthaltenden Gemisches mit Ammoniak ausgeschlossen sein soll.

2. Verfahren nach Anspruch 1, dadurch gekennzeichnet, daß unabhängig voneinander
$R^1,R^2,R^4$ = H, $C_1$-$C_3$-Alkyl oder $C_2$-$C_3$-Alkenyl und
$R^3,R^5$ = $C_1$-$C_3$-Alkyl oder $C_2$-$C_3$-Alkenyl ist.

3. Verfahren nach Anspruch 1, dadurch gekennzeichnet, daß $R^1$ = H, $R^2 = R^3 = R^5 = CH_3$ und $R^4 = CH_3$ oder Vinyl ist.

4. Oligosilazane, erhältlich nach dem Verfahren gemäß einem der Ansprüche 1 bis 3.

5. Oligosilazane der Formel

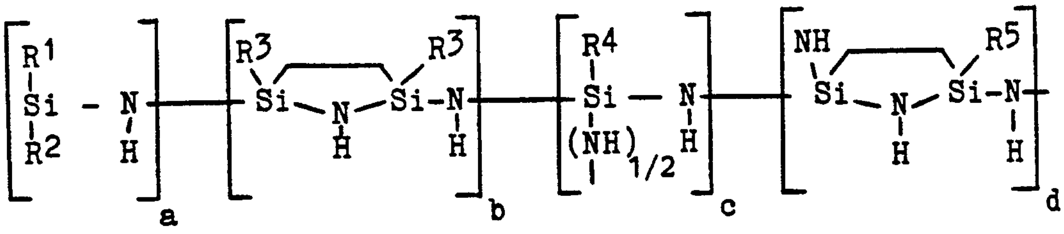

wobei unabhängig voneinander
$R^1,R^2,R^4$ = H, $C_1$-$C_6$-Alkyl oder $C_2$-$C_6$-Alkenyl und
$R^3,R^5$ = $C_1$-$C_6$-Alkyl oder $C_2$-$C_6$-Alkenyl ist
und der Fall, daß gleichzeitig $a>0, b>0, c=0$ und $d=0$ ist, ausgeschlossen sein soll.

6. Oligosilazane nach Anspruch 5, dadurch gekennzeichnet, daß unabhängig voneinander
$R^1,R^2,R^4$ = H, $C_1$-$C_3$-Alkyl oder $C_2$-$C_3$-Alkenyl und
$R^3,R^5$ = $C_1$-$C_3$-Alkyl oder $C_2$-$C_3$Alkenyl ist.

7. Oligosilazane nach Anspruch 5, dadurch gekennzeichnet, daß $R^1$ = H, $R^2 = R^3 = R^5$ = $CH_3$ und $R^4$ = $CH_3$ oder Vinyl ist.